# EUROPÄISCHE PATENTANMELDUNG

(11) **EP 1 450 556 A1**
(43) Veröffentlichungstag der Anmeldung: **25.08.2004**
(21) Anmeldenummer: 03003431.8
(22) Anmeldetag: 14.02.2003
(51) Int. Cl.: H04N 5/232, H04N 5/222

(54) **Verfahren und System zur Bild- und Tondatenaufnahme**

(71) Anmelder: Earth Television Network AG, 80805 München (DE)
(72) Erfinder: Hohenacker, Thomas, 82319 Starnberg (DE)
(74) Vertreter: Manitz, Finsterwald & Partner GbR

(57) **Zusammenfassung**

Die Erfindung betrifft ein Verfahren zum Bereitstellen von Bild- und Tondaten umfassenden Filmaufnahmen von wenigstens einem Schauplatz, bei dem mittels wenigstens eines am Schauplatz installierten Kamerasystems Bilddaten vom Schauplatz und mittels zumindest eines am Schauplatz befindlichen Mikrophons Tondaten vom Schauplatz aufgenommen werden, die Bilddaten und die Tondaten an wenigstens eine Aufnahmeeinrichtung übermittelt werden, und an der Aufnahmeeinrichtung aus den Bilddaten und den Tondaten eine Filmaufnahme gebildet wird, wobei eine für die Übermittlung der Tondaten verwendete Übertragungsstrecke zusätzlich zur Übermittlung wenigstens einer schauplatzspezifischen Aufnahmeinformation genutzt wird, die Aufnahmeinformation an der Aufnahmeeinrichtung ausgewertet wird, und die Filmaufnahme in Abhängigkeit von dem Ergebnis der Auswertung der Aufnahmeinformation gebildet wird. Die Erfindung betrifft außerdem ein System zum Bereitstellen von Bild- und Tondaten umfassenden Filmaufnahmen.

## Beschreibung

Die Erfindung betrifft ein Verfahren sowie ein System zum Bereitstellen von Bild- und Tondaten umfassenden Filmaufnahmen von wenigstens einem Schauplatz.

Bei der herkömmlichen Herstellung von Filmaufnahmen sind nicht nur die vor der Kamera agierenden Akteure als bei der Filmaufnahme mitwirkende Personen am Schauplatz, d.h. am "Set", anwesend, sondern außerdem das Aufnahmeteam hinter der Kamera, das zumindest aus einem Kameramann besteht. Die Tondaten werden entweder zusammen mit den Bilddaten aufgenommen und übertragen bzw. gespeichert oder zunächst unabhängig von den Bilddaten am Schauplatz aufgenommen und zu einem späteren Zeitpunkt mit den Bilddaten zu der eigentlichen Filmaufnahme zusammengesetzt.

Bei herkömmlichen Filmaufnahmen sind folglich zusätzlich zu den bei der Filmaufnahme Mitwirkenden vor der Kamera solche Personen am Schauplatz anwesend, die für einen ordnungsgemäßen Start und Ablauf der Filmaufnahme sorgen. Problematisch sind dagegen Projekte mit unbemannten Schauplätzen bzw. Drehorten, an denen ein Kamerasystem installiert ist, das aus der Ferne bedient wird oder zumindest weitestgehend automatisch arbeiten kann. An solchen Schauplätzen steht kein fachkundiges Personal zur Verfügung, das z.B. dafür sorgen kann, dass die Filmaufnahme, d.h. die Aufnahme der Bild- und Tondaten, zum richtigen Zeitpunkt gestartet wird, oder dass eine einwandfreie Aufnahme der Tondaten erfolgt.

Im Unterhaltungssektor spielen zunehmend solche Formate eine Rolle, bei denen man "die Frau und den Mann auf der Straße" als Darsteller für spontane Aufnahmen gewinnen möchte, die insbesondere live gesendet werden sollen. Bei derartigen Projekten ist es aus Zeit- und Kostengründen nicht möglich, einen studio- oder setmäßigen Aufwand insbesondere hinsichtlich einer einwandfreien Aufnahme der Tondaten zu treiben, um die Filmaufnahmen herzustellen. Wenn hierbei ein möglichst hoher Automatisierungsgrad angestrebt wird, dann muss nicht nur für einen ordnungsgemäßen Start und Ablauf der Filmaufnahmen, sondern auch dafür gesorgt werden, dass der dazu gehörende Ton einwandfrei aufgenommen wird, da man nicht nur daran interessiert ist, die Laiendarsteller zu zeigen - was mit einem geeigneten Kamerasystem auch aus großer Entfernung problemlos möglich ist -, sondern insbesondere auch an Sprach- und/oder Gesangsbeiträgen der Laiendarsteller interessiert ist.

Aufgabe der Erfindung ist es daher, auf möglichst einfache Weise die Durchführung von Filmaufnahmen insbesondere im Hinblick auf deren ordnungsgemäßen Start und Ablauf sowie auf eine einwandfreie Aufnahme der Tondaten zu ermöglichen, wobei dies insbesondere auch bei zumindest weitgehend automatischen Aufnahmeverfahren mit unbemannten Kameras an Schauplätzen ohne Aufnahmepersonal möglich sein soll.

Die Lösung dieser Aufgabe erfolgt zum einen durch die Merkmale des unabhängigen Verfahrensanspruchs und insbesondere dadurch, dass mittels wenigstens eines am Schauplatz installierten Kamerasystems Bilddaten vom Schauplatz und mittels zumindest eines am Schauplatz befindlichen Mikrophons Tondaten vom Schauplatz aufgenommen werden, die Bilddaten und die Tondaten an wenigstens eine Aufnahmeeinrichtung übermittelt werden, und an der Aufnahmeeinrichtung aus den Bilddaten und den Tondaten eine Filmaufnahme gebildet wird, wobei eine für die Übermittlung der Tondaten verwendete Übertragungsstrecke zusätzlich zur Übermittlung wenigstens einer schauplatzspezifischen Aufnahmeinformation genutzt wird, die Aufnahmeinformation an der Aufnahmeeinrichtung ausgewertet wird, und die Filmaufnahme in Abhängigkeit von dem Ergebnis der Auswertung der Aufnahmeinformation gebildet wird.

Erfindungsgemäß wird die für die Tondaten vorgesehene Übertragungsstrecke außerdem dazu genutzt, zusätzliche Informationen über den jeweiligen Schauplatz bzw. Dreh- oder Aufnahmeort an die Aufnahmeeinrichtung zu übermitteln, der es dadurch ermöglicht wird, in einer individuell auf die jeweilige Situation am Schauplatz bzw. an die konkreten Eigenschaften des jeweiligen Schauplatzes zugeschnittenen Art und Weise zu arbeiten.

Zwei besonders bevorzugte Beispiele, auf die nachstehend noch näher eingegangen wird, zur Nutzung der vom Schauplatz an die Aufnahmeeinrichtung übermittelten Aufnahmeinformation sind die Verwendung der Aufnahmeinformation einerseits als ein die Bildung der Filmaufnahme, insbesondere die Aufnahme der Bilddaten oder den Betrieb des Kamerasystems, startendes Freigabesignal und andererseits zum zeitlichen Synchronisieren der Bilddaten und der Tondaten. Diese beiden Möglichkeiten können gemeinsam oder getrennt voneinander eingesetzt werden.

Bei der Aufnahmeeinrichtung kann es sich um eine lokale, am jeweiligen Schauplatz befindliche Aufnahmeeinrichtung oder um eine vom Schauplatz entfernt gelegene zentrale Aufnahmeeinrichtung handeln, die insbesondere für eine Mehrzahl von Schauplätzen zuständig ist. Die Aufnahmeeinrichtung kann auch von zumindest einer lokalen Einrichtung und wenigstens einer zentralen Einrichtung gemeinsam gebildet werden.

Die Lösung der der Erfindung zugrunde liegenden Aufgabe erfolgt außerdem durch die Merkmale des unabhängigen Vorrichtungsanspruchs und insbesondere dadurch, dass das eingangs erwähnte System wenigstens ein am Schauplatz installiertes Kamerasystem, mittels welchem Bilddaten vom Schauplatz aufnehmbar sind, zumindest ein am Schauplatz befindliches Mikrophon, mittels welchem Tondaten vom Schauplatz aufnehmbar sind, und wenigstens eine Aufnahmeeinrichtung umfasst, an welche die Bilddaten und die Tondaten übermittelbar sind und welche zur Bildung von Filmaufnahmen aus den Bilddaten und den Tondaten ausgebildet ist, wobei eine für die Übermittlung der Tondaten verwendete Übertragungsstrecke zusätzlich zur Übermittlung wenigstens einer schauplatzspezifischen Aufnahmeinformation nutzbar ist, und die Aufnahmeeinrichtung zur Auswertung der Aufnahmeinformation und zu einer von dem Ergebnis der Auswertung der Aufnahmeinformation abhängigen Bildung der Filmaufnahme ausgebildet ist.

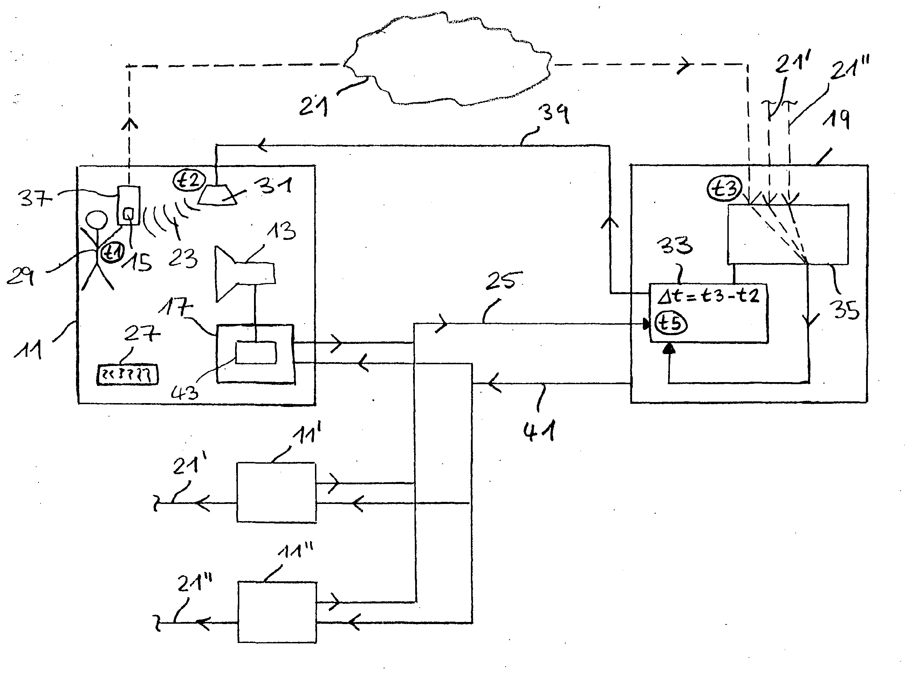

Bevorzugte Ausführungsformen der Erfindung sind in den Unteransprüchen, der Beschreibung sowie der Zeichnung angegeben.

So ist gemäß einer besonders bevorzugten Ausführungsform vorgesehen, dass zur Übermittlung der Tondaten und der Aufnahmeinformation ein das Mikrophon umfassendes Telefon verwendet wird. Bei dem Telefon handelt es sich insbesondere um das Mobiltelefon eines Benutzers. Hierdurch wird in vorteilhafter Weise mit dem Telefon und dem dazugehörigen Kommunikationsnetz, beispielsweise einem Mobilfunknetz, eine bereits vorhandene Infrastruktur zur Übermittlung sowohl der Tondaten als auch der Aufnahmeinformation genutzt.

Ferner ist bevorzugt vorgesehen, dass die Aufnahmeinformation zusammen mit den Tondaten an die Aufnahmeeinrichtung übermittelt wird. Damit kann an der Aufnahmeeinrichtung die Auswertung der Aufnahmeinformation erfolgen, während gleichzeitig die Tondaten an der Aufnahmeeinrichtung eintreffen.

In einem besonders bevorzugten Ausführungsbeispiel der Erfindung wird als schauplatzspezifische Aufnahmeinformation ein Tonsignal verwendet, das am Schauplatz erzeugt und über das Mikrophon aufgenommen wird. Durch die Erzeugung des Tonsignals am Schauplatz ist sichergestellt, dass die bei der Aufnahmeeinrichtung eintreffende, von dem Tonsignal gebildete Aufnahmeinformation auch tatsächlich von demjenigen Schauplatz stammt, an welchem die zur Bildung der jeweiligen Filmaufnahme zu verwendenden Bilddaten und Tondaten aufgenommen werden.

Vorzugsweise werden die Bilddaten und die Tondaten über unterschiedliche Datenübertragungsstrecken von dem Schauplatz an die Aufnahmeeinrichtung übermittelt. Auf diese Weise können für die Bilddaten einerseits und die Tondaten andererseits jeweils hinsichtlich Kosten und Aufwand optimierte Übertragungsstrecken vorgesehen werden. Wenn beispielsweise die Aufnahme der Tondaten mittels eines am Schauplatz befindlichen Telefons erfolgt, dann kann zur Übertragung der Tondaten an die Aufnahmeeinrichtung eine mit dem Telefonnetz bereits vorhandene Infrastruktur genutzt werden. Es ist dann lediglich noch für eine Übertragung der Bilddaten zu sorgen.

Bei der Nutzung eines Telefonnetzes und insbesondere eines Mobilfunknetzes hat der Betreiber des erfindungsgemäßen Verfahrens bzw. des erfindungsgemäßen Systems allerdings in der Regel keinen Einfluss auf die konkrete Art und Weise der Tondatenübertragung. Insbesondere kann der Betreiber nicht die Laufzeit vorhersagen, welche die Tondaten vom Schauplatz bis zur Aufnahmeeinrichtung benötigen, da es den Betreibern der Telefon- bzw. Mobilfunknetze vorbehalten ist, die jeweilige konkrete Übertragungsstrecke zu wählen, wobei zumindest theoretisch die Übertragungsstrecken für zwei aufeinander folgende Telefonate vom Schauplatz zur Aufnahmeeinrichtung verschieden sein können.

Die Folge hiervon ist, dass - bezogen auf den Zeitpunkt des Eintreffens der Bilddaten an der Aufnahmeeinrichtung - die Ankunftszeiten der Tondaten an der Aufnahmeeinrichtung von Aufnahme zu Aufnahme variieren können, wobei außerdem der hieraus resultierende zeitliche Abstand zwischen dem Eintreffen der Bilddaten einerseits und der Tondaten andererseits an der Aufnahmeeinrichtung für den Betreiber des erfindungsgemäßen Verfahrens bzw. des erfindungsgemäßen Systems nicht vorhergesagt werden kann.

Dabei ist nicht nur die Schwankung des Zeitabstands, sondern bereits dessen Existenz an sich problematisch. In der Praxis kommt es zu Verzögerungen in der Tondatenübertragung gegenüber der Bilddatenübertragung um mehr als 0,5 Sekunden. Eine aus Bilddaten und Tondaten bestehende Filmaufnahme wird als "lippensynchron" und damit für den Betrachter akzeptabel bezeichnet, wenn Bild und Ton um weniger als 0,1 Sekunden gegeneinander verschoben sind. Bei einer in der Praxis üblichen Einzelbildfolgefrequenz von 50 Hz, d.h. wenn die Einzelbilder in einem zeitlichen Abstand von 20 Millisekunden ausgestrahlt werden, sind zeitliche Verschiebungen zwischen Bild und Ton in einer Größenordnung von bis zu 5 Einzelbildern folglich unkritisch. Die vorstehend erwähnte Verzögerung um mehr als 0,5 Sekunden dagegen, die bei einer Übermittlung der Tondaten über ein Telefonnetz auftritt, führt ohne spezielle Maßnahmen nicht mehr zu einer lippensynchronen Filmaufnahme.

Um dieser Problematik zu begegnen, ist gemäß einer besonders bevorzugten Ausführungsform der Erfindung vorgesehen, dass die Aufnahmeinformation zum zeitlichen Synchronisieren der Bilddaten und der Tondaten verwendet wird. Nachdem die Übermittlung der Aufnahmeinformation vom Schauplatz an die Aufnahmeeinrichtung über die gleiche Übertragungsstrecke erfolgt wie die Übermittlung der Tondaten, kann mittels der Aufnahmeinformation auf besonders elegante Weise eine Kalibrierung der für die jeweilige Filmaufnahme gerade eingesetzten Tondatenübertragungsstrecke realisiert werden, die es der Aufnahmeeinrichtung ermöglicht, die Bilddaten und die Tondaten zu synchronisieren und auf diese Weise eine lippensynchrone Filmaufnahme zu bilden. Es wird also mittels der Aufnahmeinformation der zeitliche Abstand bestimmt, mit dem die Bilddaten und die Tondaten an der Aufnahmeeinrichtung eintreffen.

Insbesondere wird der Zeitpunkt des Eintreffens eines in den Tondaten enthaltenen, als Aufnahmeinformation dienenden Tonsignals an der Aufnahmeeinrichtung in Bezug auf den bekannten Zeitpunkt der Erzeugung des Tonsignals am Schauplatz bestimmt.

Die Frequenz oder das Frequenzspektrum des Tonsignals liegt in dem Bereich, den das am Schauplatz befindliche Mikrophon und insbesondere das in einem Mobiltelefon eines Benutzers vorhandene Mikrophon übertragen kann. Vorzugsweise liegt die Frequenz bzw. das Frequenzspektrum des als Aufnahmeinformation dienenden Tonsignals im für das menschliche Ohr hörbaren Bereich.

In einer bevorzugten praktischen Ausgestaltung der Erfindung wird ein als Aufnahmeinformation dienendes Tonsignal in Form eines Toncodes erzeugt, wobei anschließend von der Aufnahmeeinrichtung die vom Schauplatz übermittelten Tondaten auf das Vorliegen des Toncodes hin überprüft werden. Die Verwendung eines Toncodes erhöht die Funktions- und Manipulationssicherheit des Systems. Bei dem Toncode handelt es sich vorzugsweise um eine Folge von Einzeltönen mit vorgegebenen Tonabständen und Tonfrequenzen.

Ein weiteres Problem bei einem unbemannten Schauplatz, d.h. bei einem Drehort ohne fachkundiges Aufnahmepersonal, besteht darin, dass zum einen der Aufnahmeeinrichtung mitgeteilt werden muss, dass mit der Bildung einer Filmaufnahme, mit der Aufnahme der Bilddaten oder mit dem Betrieb des Kamerasystems begonnen werden soll, und zum anderen sichergestellt sein muss, dass die Tondaten auch tatsächlich von dem betreffenden Schauplatz stammen.

Insbesondere bei der Verwendung von Telefonen zur Tondatenübertragung ist es denkbar, dass sich die das Telefon verwendende Person versehentlich oder absichtlich außerhalb des Schauplatzes aufhält und vom Kamerasystem überhaupt nicht erfasst werden kann bzw. will. Insbesondere sind mutwillige Störungen des Systems dadurch möglich, dass die Aufnahmeeinrichtung durch sich außerhalb des Schauplatzes aufhaltende Person dadurch blockiert wird, dass die Aufnahmeeinrichtung von diesen Störern angerufen wird, was eigentlich nur den sich am Schauplatz aufhaltenden potentiellen Benutzern des Systems vorbehalten bleiben soll.

Um dieser Problematik zu begegnen, ist gemäß einem weiteren bevorzugten Ausführungsbeispiel der Erfindung vorgesehen, dass die Aufnahmeinformation als Freigabesignal verwendet und die Filmaufnahme nur dann gebildet wird, die Bilddaten nur dann aufgenommen werden oder das Kamerasystem nur dann aktiviert wird, wenn die Aufnahmeinformation in den an die Aufnahmeeinrichtung übermittelten Daten vorhanden ist.

Wenn als Aufnahmeinformation ein am Schauplatz erzeugtes Tonsignal verwendet wird, dann werden die an die Aufnahmeeinrichtung übermittelten Tondaten daraufhin überprüft, ob die Aufnahmeinformation - also das Tonsignal - in den Tondaten vorhanden ist.

Indem erfindungsgemäß eine schauplatzspezifische Aufnahmeinformation verwendet wird, führen von außerhalb des Schauplatzes erfolgende Tondatenübertragungen an die Aufnahmeeinrichtung nicht zur Bildung von Filmaufnahmen, da diese externen Tondaten nicht die schauplatzspezifische Aufnahmeinformation enthalten können.

Wenn als Aufnahmeinformation ein am Schauplatz erzeugtes Tonsignal verwendet wird, dann kann nur ein am Schauplatz befindliches Mikrophon, z.B. das Mikrophon eines Mobiltelefons eines Benutzers, dieses Tonsignal an die Aufnahmeeinrichtung übertragen, wodurch versehentliche oder absichtliche Störer von außerhalb des Schauplatzes daran gehindert werden, die Bildung von Filmaufnahmen zu initiieren.

Erst durch die erfindungsgemäße Nutzung einer zusätzlich zu den Tondaten über die Tondatenübertragungsstrecke an die Aufnahmeeinrichtung übermittelten Aufnahmeinformation ist ein einfacher und störungssicherer Betrieb eines automatischen, unbemannten Systems zur Bereitstellung von Bild- und Tondaten umfassenden Filmaufnahmen möglich, wobei die Aufnahmeinformation sowohl zum Synchronisieren der Bilddaten und der Tondaten als auch als Freigabesignal verwendet werden kann, um zu überprüfen, ob die Tondaten überhaupt vom jeweiligen Schauplatz stammen.

Vorzugsweise wird die Erzeugung eines als Aufnahmeinformation dienenden Tonsignals initiiert, indem vom Schauplatz aus mittels eines Telefons eine Kommunikationsverbindung zu der Aufnahmeeinrichtung hergestellt wird, die anschließend veranlasst, dass am Schauplatz das Tonsignal erzeugt wird.

Hierbei ist es der Benutzer selbst, der mit seinem eigenen Mobiltelefon oder z.B. einem am Schauplatz fest installierten Telefon eine schauplatzspezifische Bereitstellung von Filmaufnahmen, bei denen er selbst und/oder eine andere am Schauplatz befindliche Person als Darsteller mitwirkt, initiieren kann.

Bevorzugt ist vorgesehen, dass die Kommunikationsverbindung zu der Aufnahmeeinrichtung durch Wählen einer für einen Schauplatz spezifischen, z.B. am Schauplatz angezeigten, Telefonnummer aufgebaut und anschließend von der Aufnahmeeinrichtung ein als Aufnahmeinformation dienendes Tonsignal nur an dem der Telefonnummer zugeordneten Schauplatz erzeugt wird.

Alternativ kann vorgesehen sein, dass die Kommunikationsverbindung zu der Aufnahmeeinrichtung durch Wählen einer mehreren Schauplätzen zugeordneten Telefonnummer aufgebaut und anschließend von der Aufnahmeeinrichtung für jeden Schauplatz ein unterschiedliches, als Aufnahmeinformation dienendes Tonsignal erzeugt wird. Eine einheitliche Telefonnummer für alle oder zumindest eine Mehrzahl von Schauplätzen ist für die Nutzung des erfindungsgemäßen Verfahrens bzw. des erfindungsgemäßen Systems förderlich, da sich die potentiellen Mitwirkenden lediglich eine einzige Telefonnummer zu merken brauchen.

Damit die Aufnahmeeinrichtung die Schauplätze voneinander unterscheiden kann, können beispielsweise an den Schauplätzen unterschiedliche Tonfolgen erzeugt werden, die sich hinsichtlich des Tonabstands und/oder der Tonfrequenz voneinander unterscheiden, d.h. für jeden Schauplatz wird eine spezifische Tonfolge vorgesehen, anhand welcher die Aufnahmeeinrichtung den jeweiligen Schauplatz identifizieren kann.

Da sich der anrufende Benutzer nur an einem einzigen der Schauplätze aufhalten kann, kann das als Aufnahmeinformation dienende, von der Aufnahmeeinrichtung empfangene Tonsignal auch nur von eben diesem Schauplatz stammen, so dass der Aufnahmeeinrichtung durch Auswerten der Aufnahmeinformation bekannt ist, von welchem Schauplatz der Anruf kommt, und folglich nur das an eben diesem Schauplatz befindliche Kamerasystem aktiviert bzw. nur die von eben diesem Schauplatz stammenden Bilddaten zur Bildung der Filmaufnahme verwendet werden.

Die Erfindung ist nicht auf die Verwendung eines am Schauplatz erzeugten Tonsignals als schauplatzspezifische Aufnahmeinformation beschränkt. Alternativ oder zusätzlich kann erfindungsgemäß vorgesehen sein, dass die Aufnahmeinformation verbindungsspezifische Daten einer Kommunikationsverbindung umfasst, die zwischen einem das Mikrophon umfassenden Telefon und der Aufnahmeeinrichtung aufgebaut wird, um die für die Übermittlung der Tondaten verwendete Übertragungsstrecke zu bilden.

Dabei können die verbindungsspezifischen Daten Informationen über das Übertragungsprotokoll der Kommunikationsverbindung, über die Rufnummer des Telefons, über die zum Aufbau der Kommunikationsverbindung mittels des Telefons gewählte Telefonnummer, über das oder die für die Kommunikationsverbindung verwendeten Mobilfunknetze und/oder Mobilfunkzellen und/oder über mittels des Telefons versandte nichtakustische Nachrichten, z.B. SMS-Nachrichten, umfassen.

Das Übertragungsprotokoll von Mobilfunkverbindungen beispielsweise enthält Informationen, aus denen auf die Laufzeit der Tondaten von dem Mobiltelefon zur Aufnahmeeinrichtung geschlossen und mit denen folglich die Verzögerung der Tondaten gegenüber den Bilddaten korrigiert werden kann. Die Verzögerung wird in diesem Fall also nicht "gemessen", sondern aus den Informationen des Übertragungsprotokolls berechnet.

Wenn für einen Schauplatz von vornherein alle für anrufende Benutzer in Frage kommenden Kommunikationsverbindungen - z.B. alle an dem Schauplatz vorhandenen Mobilfunkzellen der einzelnen Mobilfunknetzbetreiber - bekannt sind, dann können alle für diesen Schauplatz auftretenden Laufzeiten der Tondaten im Voraus berechnet und in einer Nachschlagtabelle abgelegt werden. Anhand der Rufnummer des Telefons eines anrufenden Benutzers kann für die jeweilige Kommunikationsverbindung der Mobilfunknetzbetreiber erkannt, die Laufzeit der Tondaten nachgeschlagen und damit die Verzögerung der Tondaten gegenüber den Bilddaten bestimmt werden.

Um sich als am Schauplatz befindliche Person zu identifizieren, kann der Benutzer beispielsweise aufgefordert werden, entweder die zum Anrufen der Aufnahmeeinrichtung zu wählende Telefonnummer um einen Zahlencode zu ergänzen, der z.B. am Schauplatz angezeigt und damit nur am Schauplatz befindlichen Personen bekannt gemacht wird, oder an die Aufnahmeeinrichtung eine SMS-Nachricht zu senden, mit welcher er z.B. einen Berechtigungscode oder eine andere Information an die Aufnahmeeinrichtung übermittelt, anhand welcher er als berechtigte Person identifiziert und woraufhin er - eventuell in Abhängigkeit von einem Auswahlverfahren - zurückgerufen wird.

Bei dem erfindungsgemäßen System ist bevorzugt vorgesehen, dass es ein am Schauplatz befindliches, das Mikrophon aufweisendes Telefon umfasst, wobei es sich insbesondere um ein Mobiltelefon eines sich am Schauplatz aufhaltenden Benutzers handelt.

Ferner ist es bevorzugt, dass mittels des Telefons eine Kommunikationsverbindung zu dem Kamerasystem herstellbar ist, insbesondere über die Aufnahmeeinrichtung, wobei vorzugsweise das Kamerasystem mittels der Aufnahmeeinrichtung steuerbar ist.

Vorzugsweise umfasst das System ferner eine am Schauplatz vorgesehene Tonsignalerzeugungseinrichtung, mittels welcher ein als die Aufnahmeinformation dienendes Tonsignal erzeugbar ist.

Das Tonsignal kann mittels eines herkömmlichen Lautsprechers erzeugt werden. Eine alternative, besonders einfache, kostengünstige und platzsparende Möglichkeit besteht in der Verwendung eines Piezokristalls, mit dem sich grundsätzlich beliebige Tonsignale erzeugen lassen. Um das Tonsignal mittels des Mikrophons aufzunehmen, kann z.B. der gesamte Schauplatz beschallt werden. Ist dies nicht realisierbar oder unerwünscht, kann alternativ vorgesehen sein, dass das Mikrophon, insbesondere ein das Mikrophon aufweisendes Telefon, in die Nähe eines das Tonsignal erzeugenden Lautsprechers gehalten wird. Ein mittels seines Mobiltelefons anrufender Benutzer beispielsweise kann dazu aufgefordert werden, sein Telefon an eine bestimmte Stelle eines als Kulisse oder Bühne dienenden Aufbaus zu halten, in den der Lautsprecher eingebaut ist.

Des Weiteren umfasst das erfindungsgemäße System vorzugsweise unterschiedliche Datenübertragungsstrecken für die Bilddaten einerseits und für die Tondaten andererseits.

Des Weiteren ist die Aufnahmeeinrichtung vorzugsweise mit einer Synchronisationseinrichtung zum zeitlichen Synchronisieren der Bilddaten und der Tondaten versehen, mit der insbesondere der zeitliche Abstand bestimmt werden kann, mit dem die Bilddaten und die Tondaten an der Aufnahmeeinrichtung eintreffen. Vorzugsweise ist mittels der Synchronisationseinrichtung der Zeitpunkt des Eintreffens eines in den Tondaten enthaltenen, als Aufnahmeinformation dienenden Tonsignals in Bezug auf den bekannten Zeitpunkt der Erzeugung des Tonsignals am Schauplatz bestimmbar.

Ferner ist vorzugsweise vorgesehen, dass die Aufnahmeeinrichtung eine Nachweiseinrichtung umfasst, mittels welcher die Aufnahmeinformation in den Tondaten nachweisbar und bei in den Tondaten vorhandener Aufnahmeinformation ein Freigabesignal zur Bildung der Filmaufnahme bereitstellbar ist.

Die Erfindung wird im Folgenden beispielhaft unter Bezugnahme auf die Zeichnung beschrieben, deren einzige Figur schematisch eine Ausführungsform eines erfindungsgemäßen Systems zum Bereitstellen von Filmaufnahmen zeigt, das gemäß dem erfindungsgemäßen Verfahren betrieben werden kann.

Das in der Figur dargestellte erfindungsgemäße System zum Bereitstellen von Bild- und Tondaten umfassenden Filmaufnahmen weist ein Kamerasystem 13 auf, das fest an einem Schauplatz 11 installiert und lediglich zur Aufnahme von Bilddaten ausgebildet ist, d.h. die Aufnahme der zugehörigen Tondaten erfolgt nicht über das Kamerasystem 13.

Bei dem Schauplatz 11 kann es sich grundsätzlich um jede beliebige öffentliche oder nicht-öffentliche Lokalität handeln, beispielsweise eine öffentliche Straße, ein öffentlicher Platz, ein Restaurant, eine Kneipe, ein Kaufhaus oder eine Bühne in einem öffentlich zugänglichen oder privaten Gebäude. In einer weiteren möglichen Anwendung handelt es sich bei dem Schauplatz um eine Sportveranstaltungsstätte, die eine große Anzahl von Zuschauern fassen kann, z.B. um ein Fußballstadion.

Das Kamerasystem 13 kann eine einzige, aber auch eine Mehrzahl von einzelnen Kameras umfassen, die jeweils den ganzen oder einen Teilbereich des Schauplatzes 11 erfassen können. Die Kamera oder Kameras können starr in eine bestimmte Richtung blicken oder verschwenkbar ausgeführt sein. Vorzugsweise ist die Kamera bzw. sind die Kameras jeweils mit einer Zoomfunktion ausgestattet.

Das erfindungsgemäße System umfasst des Weiteren eine oder mehrere Einrichtungen 31 zur Erzeugung von für das menschliche Ohr hörbaren Tonsignalen 23. Die Einrichtung 31 kann dabei in Form eines herkömmlichen Lautsprechers vorgesehen und insbesondere von einer bereits vorhandenen Lautsprecheranlage gebildet werden. Alternativ der Lautsprecher in einen als Kulisse oder Bühne dienenden Aufbau an einer bestimmten Stelle derart eingebaut sein, dass ein Mobiltelefon 37 an diese Stelle gehalten werden muss, damit das Tonsignal 23 von dem Mikrophon 15 des Mobiltelefons 37 aufgenommen werden kann.

Außerdem umfasst das erfindungsgemäße System eine Aufnahmeeinrichtung 17, 19, die in dem dargestellten Ausführungsbeispiel eine lokale, am Schauplatz 11 befindliche Station 17 und eine vom Schauplatz 11 räumlich getrennt vorgesehene zentrale Station 19 umfasst, die über Kommunikationsverbindungen 25, 41 miteinander kommunizieren können. Die Zentralstation 19 kann darüber hinaus mit weiteren Lokalstationen kommunizieren, die an weiteren, in der Figur lediglich schematisch angedeuteten Schauplätzen 11', 11" installiert sind, bei denen es sich beispielsweise um weitere Fußballstadien handelt. Die Lokalstation 17 umfasst eine Datenverarbeitungseinrichtung 43, während die Zentralstation 19 eine Nachweiseinrichtung 35 und eine Synchronisationseinrichtung 33 aufweist.

Die mit dem Kamerasystem 13 aufgenommenen Bilddaten werden an die lokale Station 17 übermittelt, von der die Bilddaten anschließend an die Zentralstation 19 übermittelt werden, wobei die Bilddaten an der Lokalstation 17 grundsätzlich beliebig lange zwischengespeichert bzw. -gepuffert werden können. Dabei bildet eine der vorstehend erwähnten Kommunikationsverbindungen 25 die Übertragungsstrecke für die Bilddaten.

Das erfindungsgemäße System umfasst ferner wenigstens ein am Schauplatz 11 befindliches Telefon 37 mit einem Mikrophon 15, bei dem es sich in dem dargestellten Ausführungsbeispiel um das Mobiltelefon 37 eines sich am Schauplatz 11 aufhaltenden Benutzers 29 handelt, der das erfindungsgemäße System dazu verwenden möchte, Filmaufnahmen herstellen zu lassen, bei denen er selbst als Darsteller mitwirkt. Dabei ist die Art und Weise der Mitwirkung grundsätzlich beliebig.

Das erfindungsgemäße System umfasst ferner Übertragungsstrecken 21, 21', 21" für über das Mikrophon 15 des Mobiltelefons 37 aufgenommene Tondaten, um von dem Schauplatz 11 stammende Tondaten an die Zentralstation 19 zu übermitteln.

Zumindest auf einen Teil der Übertragungsstrecke 21 für die Tondaten hat der Betreiber des erfindungsgemäßen Systems keinen Einfluss. Vielmehr wird ein vorhandenes Kommunikationsnetz, insbesondere ein Mobilfunknetz, zur Übertragung der Tondaten vom Schauplatz 11 an die Zentralstation 19 genutzt.

Nach Ablauf einer Startprozedur, die nachstehend näher erläutert wird, erfolgt die Bereitstellung der Filmaufnahmen - welche die vom Kamerasystem 13 gelieferten Bilddaten und die mittels des Mobiltelefonmikrophons 15 aufgenommenen Tondaten umfassen - dadurch, dass an der Zentralstation 19 die Bild- und Tondaten zusammengeführt und in einer korrekt synchronisierten Fassung, d.h. ohne zeitliche Relativverschiebung zwischen Bild und Ton, und ggf. nach weiterer Aufbereitung als fertige Filmaufnahme gespeichert oder live oder - aufgrund einer technisch bedingten Verzögerung - quasi-live gesendet werden.

Die Übertragung der Bilddaten von der Lokalstation 17 an die Zentralstation 19 kann kontinuierlich oder quasi-kontinuierlich im Anschluss an eine grundsätzlich beliebig lange andauernde Zwischenpufferung der Bilddaten an der Lokalstation 17 erfolgen.

Die vorstehend erwähnte Startprozedur wird durch einen Benutzer 29 eingeleitet, d.h. die Initiative geht vom Kunden des Systembetreibers aus, indem dieser Kunde 29 z.B. mit seinem Mobiltelefon 37 - oder einem am Schauplatz 11 zu diesem Zweck eingerichteten Festnetztelefon - eine vorgegebene Telefonnummer 27 wählt, die ihm z.B. entweder aus der Werbung bekannt ist oder die am betreffenden Schauplatz 11 angezeigt wird.

Insbesondere aus Gründen einer effektiveren Vermarktung oder Bewerbung ist es bevorzugt, wenn für alle Schauplätze 11, 11', 11" die gleiche Telefonnummer verwendet wird, so dass von jedem Schauplatz 11, 11', 11" aus die Zentralstation 19 über eine einheitliche Telefonnummer angerufen werden kann. Alternativ ist es aber auch möglich, für jeden Schauplatz eine eigene und damit eine schauplatzspezifische Telefonnummer vorzusehen.

Zusätzlich kann vorgesehen sein, dass diese Telefonnummer vom Benutzer 29 durch eine oder mehrere benutzerspezifische Ziffern ergänzt werden muss, um eine Kommunikationsverbindung zu der Zentralstation 19 herstellen zu können. Durch diesen Ziffernzusatz kann grundsätzlich jede beliebige Information codiert werden, beispielsweise der genaue Standort des Benutzers 29 am Schauplatz 11, So kann z.B. durch eine zusätzliche Ziffernfolge der Block, die Reihe und die Sitzplatznummer des Sitzes codiert werden, auf welchem der Benutzer 29 in einem Fußballstadion gerade sitzt, während er mittels seines Mobiltelefons 37 die Zentralstation 19 anwählt. Der Zentralstation 19 wird auf diese Weise mitgeteilt, wo genau im Stadion der anrufende Benutzer 29 sich gerade befindet. Das Kamerasystem kann dann auf den Sitzplatz des Anrufers 29 ausgerichtet werden, wobei auch dies automatisch dadurch erfolgen kann, dass die erforderlichen Kamerabewegungen für alle Sitzplätze des Stadions in einer Datenbank abgespeichert sind. Eine derartige Individualisierung des angerufenen Benutzers 29 ist erfindungsgemäß aber nicht zwingend erforderlich, ermöglicht jedoch besonders vorteilhafte Anwendungsbeispiele der Erfindung.

Alternativ kann der Benutzer 29 die der Zentralstation 19 mitzuteilenden Informationen auch in Form einer SMS-Nachricht versenden, woraufhin der Benutzer 29 von der Zentralstation 19 zurückgerufen wird. Auch in diesem Fall geht die Initiative zum Aufbau der Kommunikationsverbindung aber von dem Benutzer 29 aus.

Im Folgenden wird die erwähnte Startprozedur anhand eines Anwendungsbeispiels erläutert, bei dem die initiierende Handlung ein Anruf bei der Zentralstation 19 mittels des Mobiltelefons 37 ist und sowohl zur Identifizierung des Benutzers 29 als auch zur Eliminierung der Verzögerung der Tondaten ein am Schauplatz 11 erzeugtes Tonsignal 23 verwendet wird.

Die Herstellung der Kommunikationsverbindung zwischen dem Mobiltelefon 37 und der Zentralstation 19 erfolgt zu einem Zeitpunkt t1. Dabei kann vorgesehen sein, dass der Benutzer 29 eine gebührenpflichtige fremde, d.h. nicht von dem Betreiber des erfindungsgemäßen Verfahrens bzw. des erfindungsgemäßen Systems angebotene, Telefonnummer 27 anrufen muss, die mehreren oder allen Schauplätzen 11, 11', 11' zugeordnet ist, woraufhin der Anruf 29 von dem Fremdanbieter an die Zentralstation 19 weitergeschaltet wird. Hierdurch fallen einerseits Gebühren an, wobei andererseits sichergestellt ist, dass die weitere Verarbeitung der Tondaten nicht beim Fremdanbieter erfolgen muss, sondern beim Betreiber des erfindungsgemäßen Verfahrens bzw. des erfindungsgemäßen Systems stattfinden kann.

Anschließend veranlasst die Zentralstation 19 zum Zeitpunkt t2 durch entsprechende Ansteuerung der Tonsignalerzeugungseinrichtung 31 über die Kommunikationsverbindung 39 am Schauplatz 11 die Erzeugung eines für das menschliche Ohr hörbaren Tonsignals 23 in Form eines aus einer Folge von Einzeltönen bestehenden Toncodes, wobei die Tonfolge beispielsweise drei aufeinander folgende Töne mit einer Dauer von jeweils 100 Millisekunden und einer Frequenz von 1 kHz, 2 kHz und 3 kHz mit kurzen Pausen von z.B. 0,5 bis 1 Sekunde zwischen zwei aufeinander folgenden Tönen umfasst. Eine derartige Tonfolge kann beispielsweise in einen für den anrufenden Benutzer 29 eingespielten Countdown integriert werden oder diesen Countdown bilden, mit welchem dem Benutzer 29 der Start der eigentlichen Filmaufnahme angekündigt wird, so dass die Ausstrahlung der Tonfolge 23 am Schauplatz 11 nicht als störend empfunden wird.

Dieses Tonsignal 23 wird vom Mikrophon 15 des Mobiltelefons 37 aufgenommen und zusammen mit den anderen vom Schauplatz 11 stammenden Tondaten über die Übertragungsstrecke 21 an die Zentralstation 19 übermittelt, wo mittels einer an der Zentralstation 19 vorgesehenen Nachweiseinrichtung 35 das zuvor ausgesandte Tonsignal 23 identifiziert und damit in den vom Schauplatz 11 übertragenen Tondaten nachgewiesen wird.

Erst zum Zeitpunkt t3 = t2 + Δt trifft das zum Zeitpunkt t2 erzeugte Tonsignal 23 an der Zentralstation 19 ein, und zwar aufgrund der nicht vorhersagbaren Verzögerung auf der Übertragungsstrecke 21. Das Ausmaß der Verzögerung, d.h. der Zeitabstand Δt, kann von Anrufer zu Anrufer variieren.

Wenn das Tonsignal 23 an der Zentralstation 19 nachgewiesen wird, bedeutet dies, dass der Benutzer 29 tatsächlich vom Schauplatz 11 aus anruft, da anderenfalls das Tonsignal 23 nicht mittels des Mobiltelefons 37 des Benutzers 29 hätte übertragen werden können. Die Ausstrahlung des Tonsignals 23 erfolgt derart, dass außerhalb des Schauplatzes 11 keine bestimmungsgemäße Übermittlung des Tonsignals 23 über ein Mobiltelefon möglich ist. Beispielsweise von außerhalb eines den Schauplatz 11 bildenden Fußballstadions anrufenden Störern, denen die zu wählende Telefonnummer 27 bekannt ist, wird es auf diese Weise unmöglich gemacht, das erfindungsgemäße System zu verwenden. Die Nutzung der Erfindung bleibt auf diese Weise ausschließlich den am Schauplatz 11 befindlichen Benutzern 29 vorbehalten.

Im Fall eines erfolgreichen Nachweises des Tonsignals 23 in den an der Zentralstation 19 eintreffenden Tondaten stellt die Nachweiseinrichtung 35 ein Freigabesignal bereit, mit welchem die im Folgenden beschriebene Bildung der eigentlichen Filmaufnahme freigegeben und damit sozusagen "grünes Licht" für die Filmaufnahme gegeben wird, d.h. durch Aktivieren des Kamerasystems 13 mit der Aufnahme von Bilddaten begonnen wird.

An der Zentralstation 19 wird nun nicht nur das Eintreffen des Tonsignals 23 an sich nachgewiesen, sondern es wird außerdem der exakte Zeitpunkt t3 des Eintreffens des Tonsignals an der Zentralstation 19 ermittelt. Da der Zentralstation 19 der Zeitpunkt t2 der Erzeugung des Tonsignals 23 am Schauplatz 11 bekannt ist, kann somit durch eine einfache Differenzbildung die Zeitspanne Δt berechnet werden, welche die Tondaten vom Mobiltelefon 37 des Benutzers 29 bis zur Zentralstation 19 benötigen. Gegenüber dieser Laufzeit kann diejenige Zeit, welche die Schallwellen zum Zurücklegen der Strecke von der Tonsignalerzeugungseinrichtung 31 bis zum Mikrophon 15 des Mobiltelefons 37 benötigen, vernachlässigt werden.

Der mittels einer Synchronisationseinrichtung 33 der Zentralstation 19 gemessene Zeitabstand Δt zwischen dem Zeitpunkt t2 der Erzeugung des Tonsignals 23 und dem Zeitpunkt t3 des Eintreffens des Tonsignals 23 an der Zentraleinheit 19 entspricht damit der Verzögerung der vom Schauplatz 11 stammenden Tondaten gegenüber den vom Schauplatz 11 stammenden Bilddaten, und zwar für die jeweils gerade bestehende, durch Anrufen der Zentraleinheit 19 hergestellte Kommunikationsverbindung zwischen der Zentraleinheit 19 und dem Mobiltelefon 37 des Anrufers 29.

Auf diese Weise wird mittels des am Schauplatz 11 erzeugten Tonsignals 23 nicht nur der Anrufer 29 als ein berechtigter, sich am Schauplatz 11 aufhaltender Kunde identifiziert, sondern es wird außerdem die für diesen Anrufer 29 momentan verwendete Tondatenübertragungsstrecke 21 hinsichtlich der Laufzeit der Tondaten ausgemessen, wodurch das System entsprechend der momentanen Verhältnisse kalibriert werden kann.

Mit dem Nachweis des Tonsignals 23 und der Berechnung des Zeitabstands Δt ist die Startprozedur abgeschlossen.

Anschließend aktiviert die Zentralstation 19 zum Zeitpunkt t4 über die Kommunikationsverbindung 41 die Lokalstation 17 und das Kamerasystem 13 an dem Schauplatz 11, von dem aus der Benutzer 29 anruft, womit eine Aufnahme von Bilddaten von eben diesem Schauplatz 11 mittels des Kamerasystems 13 gestartet wird.

Die Lokalstation 17 beginnt dann mit der Aufzeichnung der von dem Kamerasystem 13 gelieferten Bilddaten. Das von der Datenverarbeitungseinrichtung 43 der Lokalstation 17 verwendete Medium zur Aufzeichnung bzw. Speicherung der Daten ist grundsätzlich beliebig. Zur Veranschaulichung der Datenaufzeichnung und -übertragung wird dennoch im Folgenden auch von Bild"spuren" und Ton"spuren" gesprochen.

Die Bilddaten werden mit einem Zeitstempel versehen und anschließend zum Zeitpunkt t5 über die Übertragungsstrecke 25 an die Synchronisationseinrichtung 33 der Zentralstation 19 übertragen. Wenn eine gemeinsame Zeitbasis, z.B. die so genannte Atomuhr in Braunschweig, für die Bilddaten und die Tondaten verwendet wird, dann ermöglicht der Zeitstempel der Bilddaten eine exakte zeitliche Zuordnung der Bildspur I und der Tonspur S, wobei der Tonspur S die Zeitinformation bereits dadurch aufgeprägt ist, dass der Zeitpunkt t2 der Erzeugung des Tonsignals 23 bekannt ist. Die exakte zeitliche Zuordnung ist unabhängig davon möglich, ob und wie lange eine Zwischenspeicherung der Bilddaten an der Lokalstation 17 erfolgte, d.h. für die Übertragung der Bilddaten können kostengünstige Übertragungszeiten genutzt werden, und der Ton braucht erst nach Sichtung der übertragenen Bilddaten und Auswahl von geeignetem Bildmaterial zugemischt zu werden.

In der Synchronisationseinrichtung 33 kann die Bildspur I also mit einer dem zuvor berechneten Zeitabstand Δt entsprechenden Verzögerung versehen werden, bevor die (unvermeidbar verzögerte) Tonspur S und die (künstlich verzögerte) Bildspur I zu einer kombinierten Bild- und Tonspur und damit zu der Filmaufnahme zusammengeführt werden, in der Bild und Ton die richtige relative Zeitlage aufweisen und somit lippensynchron zusammengeführt sind.

Wenn mehrere Schauplätze 11, 11', 11' vorhanden sind, denen eine einzige, z.B. gebührenpflichtige, Telefonnummer 27 zugeordnet ist, dann wird gleichzeitig für jeden Schauplatz ein individuelles Tonsignal erzeugt, um denjenigen Schauplatz zu identifizieren, an welchem sich der anrufende Benutzer 29 aufhält. Wird dagegen keine einheitliche Telefonnummer 27 verwendet, kann an allen Schauplätzen das gleiche Tonsignal erzeugt werden, da die Identifizierung des Schauplatzes dann über die schauplatzspezifische Telefonnummer erfolgt, die der Benutzer 29 an dem Schauplatz, an dem er sich aufhält, wählt und die nur diesem Schauplatz zugeordnet ist.

Die Verwendung einer einem oder mehreren Schauplätzen 11, 11', 11" zugeordneten, räumlich entfernt von dem oder den Schauplätzen gelegenen Zentralstation 19 ist nicht zwingend. Die vorstehend beschriebenen Aufgaben der Zentralstation können alternativ auch von der Lokalstation 17 des betreffenden Schauplatzes 11, 11', 11" übernommen werden.

### Bezugszeichenliste

- 11, 11', 11": Schauplatz
- 13: Kamerasystem
- 15: Mikrophon
- 17: lokale Station
- 19: zentrale Station
- 21: Übertragungsstrecke für Tondaten
- 23: Aufnahmeinformation, Tonsignal
- 25: Übertragungsstrecke für Bilddaten
- 27: Telefonnummer
- 29: Benutzer
- 31: Tonsignalerzeugungseinrichtung, Lautsprecher
- 33: Synchronisationseinrichtung
- 35: Nachweiseinrichtung
- 37: Telefon, Mobiltelefon
- 39: Kommunikationsverbindung
- 41: Kommunikationsverbindung
- 43: Datenverarbeitungseinrichtung

## Patentansprüche

1. Verfahren zum Bereitstellen von Bild- und Tondaten umfassenden Filmaufnahmen von wenigstens einem Schauplatz (11), bei dem
- mittels wenigstens eines am Schauplatz (11) installierten Kamerasystems (13) Bilddaten vom Schauplatz (11) und mittels zumindest eines am Schauplatz (11) befindlichen Mikrophons (15) Tondaten vom Schauplatz (11) aufgenommen werden,
- die Bilddaten und die Tondaten an wenigstens eine Aufnahmeeinrichtung ( 17, 19) übermittelt werden, und
- an der Aufnahmeeinrichtung (17, 19) aus den Bilddaten und den Tondaten eine Filmaufnahme gebildet wird, wobei
- eine für die Übermittlung der Tondaten verwendete Übertragungsstrecke (21) zusätzlich zur Übermittlung wenigstens einer schauplatzspezifischen Aufnahmeinformation (23) genutzt wird,
- die Aufnahmeinformation (23) an der Aufnahmeeinrichtung (17, 19) ausgewertet wird, und
- die Filmaufnahme in Abhängigkeit von dem Ergebnis der Auswertung der Aufnahmeinformation (23) gebildet wird.

2. Verfahren nach Anspruch 1,
**dadurch gekennzeichnet,**
**dass** zur Übermittlung der Tondaten und der Aufnahmeinformation (23) ein das Mikrophon (15) umfassendes Telefon (37) verwendet wird.

3. Verfahren nach Anspruch 1 oder 2,
**dadurch gekennzeichnet,**
**dass** die Aufnahmeinformation (23) zusammen mit den Tondaten an die Aufnahmeeinrichtung (17, 19) übermittelt wird.

4. Verfahren nach einem der vorhergehenden Ansprüche,
**dadurch gekennzeichnet,**
**dass** die schauplatzspezifische Aufnahmeinformation (23) ein Tonsignal ist, das am Schauplatz (11) erzeugt und über das Mikrophon (15) aufgenommen wird.

5. Verfahren nach einem der vorhergehenden Ansprüche,
**dadurch gekennzeichnet,**
**dass** die Bilddaten und die Tondaten über unterschiedliche Datenübertragungsstrecken (21, 25) von dem Schauplatz (11) an die Aufnahmeeinrichtung (17, 19) übermittelt werden.

6. Verfahren nach einem der vorhergehenden Ansprüche,
**dadurch gekennzeichnet,**
**dass** die Aufnahmeinformation (23) zum zeitlichen Synchronisieren der Bilddaten und der Tondaten verwendet wird.

7. Verfahren nach einem der vorhergehenden Ansprüche,
**dadurch gekennzeichnet,**
**dass** mittels der Aufnahmeinformation (23) der zeitliche Abstand (Δt) bestimmt wird, mit dem die Bilddaten und die Tondaten an der Aufnahmeeinrichtung (17, 19) eintreffen.

8. Verfahren nach einem der vorhergehenden Ansprüche,
**dadurch gekennzeichnet,**
**dass** der Zeitpunkt (t3) des Eintreffens eines in den Tondaten enthaltenen, als Aufnahmeinformation (23) dienenden Tonsignals an der Aufnahmeeinrichtung (17, 19) in Bezug auf den bekannten Zeitpunkt (t2) der Erzeugung des Tonsignals (23) am Schauplatz (11) bestimmt wird.

9. Verfahren nach einem der vorhergehenden Ansprüche,
**dadurch gekennzeichnet,**
**dass** die Aufnahmeinformation als Freigabesignal verwendet und die Filmaufnahme nur dann gebildet wird, wenn die Aufnahmeinformation (23) in den an die Aufnahmeeinrichtung (17, 19) übermittelten Daten vorhanden ist.

10. Verfahren nach einem der vorhergehenden Ansprüche,
**dadurch gekennzeichnet,**
**dass** ein als Aufnahmeinformation (23) dienendes Tonsignal in Form eines Toncodes erzeugt und anschließend von der Aufnahmeeinrichtung (17, 19) die vom Schauplatz (11) übermittelten Tondaten auf das Vorliegen des Toncodes (23) hin überprüft werden, wobei vorzugsweise der Toncode (23) eine Folge von Einzeltönen ist.

11. Verfahren nach einem der vorhergehenden Ansprüche,
**dadurch gekennzeichnet,**
**dass** die Erzeugung eines als Aufnahmeinformation (23) dienenden Tonsignals initiiert wird, indem vom Schauplatz (11) aus mittels eines Telefons (37) eine Kommunikationsverbindung (21) zu der Aufnahmeeinrichtung (19) hergestellt wird, die anschließend veranlasst, dass am Schauplatz (11) das Tonsignal (23) erzeugt wird.

12. Verfahren nach einem der vorhergehenden Ansprüche,
**dadurch gekennzeichnet,**
**dass** eine Kommunikationsverbindung (21) zu der Aufnahmeeinrichtung (17, 19) durch Wählen einer für einen Schauplatz (11) spezifischen Telefonnummer (27) aufgebaut und anschließend von der Aufnahmeeinrichtung (17, 19) ein als Aufnahmeinformation (23) dienendes Tonsignal nur an dem der Telefonnummer (27) zugeordneten Schauplatz (11) erzeugt wird.

13. Verfahren nach einem der Ansprüche 1 bis 11,
**dadurch gekennzeichnet,**
**dass** die Kommunikationsverbindung (21) zu der Aufnahmeeinrichtung (17, 19) durch Wählen einer mehreren Schauplätzen (11, 11', 11") zugeordneten Telefonnummer (27) aufgebaut und anschließend von der Aufnahmeeinrichtung (17, 19) für jeden Schauplatz (11, 11', 11 ") ein unterschiedliches, als Aufnahmeinformation dienendes Tonsignal erzeugt wird.

14. Verfahren nach einem der vorhergehenden Ansprüche,
**dadurch gekennzeichnet,**
**dass** die Aufnahmeinformation verbindungsspezifische Daten einer Kommunikationsverbindung umfasst, die zur Bildung der für die Übermittlung der Tondaten verwendeten Übertragungsstrecke (21) zwischen einem das Mikrophon (15) umfassenden Telefon (37) und der Aufnahmeeinrichtung (17, 19) aufgebaut wird.

15. Verfahren nach Anspruch 14,
**dadurch gekennzeichnet,**
**dass** die verbindungsspezifischen Daten Informationen über
- das Übertragungsprotokoll der Kommunikationsverbindung,
- die Rufnummer des Telefons (37),
- die zum Aufbau der Kommunikationsverbindung mittels des Telefons (37) gewählte Telefonnummer (27),
- das oder die für die Kommunikationsverbindung verwendeten Mobilfunknetze und/oder Mobilfunkzellen, und/oder
- mittels des Telefons versandte nichtakustische Nachrichten, z.B. SMS-Nachrichten,
umfassen.

16. Verfahren nach einem der vorhergehenden Ansprüche,
**dadurch gekennzeichnet,**
**dass** ein System nach einem der nachstehenden Ansprüche verwendet wird.

17. System zum Bereitstellen von Bild- und Tondaten umfassenden Filmaufnahmen von wenigstens einem Schauplatz (11), mit
- wenigstens einem am Schauplatz (11) installierten Kamerasystem (13), mittels welchem Bilddaten vom Schauplatz (11) aufnehmbar sind, zumindest einem am Schauplatz (11) befindlichen Mikrophon (15), mittels welchem Tondaten vom Schauplatz (11) aufnehmbar sind, und
- wenigstens einer Aufnahmeeinrichtung (17, 19), an welche die Bilddaten und die Tondaten übermittelbar sind und welche zur Bildung von Filmaufnahmen aus den Bilddaten und den Tondaten ausgebildet ist, wobei
- eine für die Übermittlung der Tondaten verwendete Übertragungsstrecke (21) zusätzlich zur Übermittlung wenigstens einer schauplatzspezifischen Aufnahmeinformation (23) nutzbar ist, und
- die Aufnahmeinrichtung (17, 19) zur Auswertung der Aufnahmeinformation (23) und zu einer von dem Ergebnis der Auswertung der Aufnahmeinformation (23) abhängigen Bildung der Filmaufnahme ausgebildet ist.

18. System nach Anspruch 17,
**dadurch gekennzeichnet,**
**dass** es ein am Schauplatz befindliches, das Mikrophon (15) aufweisendes Telefon (37) umfasst, insbesondere ein Mobiltelefon eines sich am Schauplatz (11) aufhaltenden Benutzers (29).

19. System nach Anspruch 18,
**dadurch gekennzeichnet,**
**dass** mittels des Telefons (37) eine Kommunikationsverbindung (21) zu dem Kamerasystem (13) herstellbar ist, insbesondere über die Aufnahmeeinrichtung (17, 19), wobei vorzugsweise das Kamerasystem (13) mittels der Aufnahmeeinrichtung (17, 19) steuerbar ist.

20. System nach einem der Ansprüche 17 bis 19,
**dadurch gekennzeichnet,**
**dass** es eine am Schauplatz (11) vorgesehene Tonsignalerzeugungseinrichtung (31) umfasst, mittels welcher ein als die Aufnahmeinformation (23) dienendes Tonsignal erzeugbar ist.

21. System nach einem der Ansprüche 17 bis 20,
**dadurch gekennzeichnet,**
**dass** es unterschiedliche Datenübertragungsstrecken (21, 25) für die Tondaten einerseits und für die Bilddaten andererseits umfasst.

22. System nach einem der Ansprüche 17 bis 21,
**dadurch gekennzeichnet,**
**dass** die Aufnahmeeinrichtung (17, 19) eine Synchronisationseinrichtung (33) zum zeitlichen Synchronisieren der Bilddaten und der Tondaten umfasst

23. System nach Anspruch 22,
**dadurch gekennzeichnet,**
**dass** die Aufnahmeeinrichtung (17, 19) zur Bestimmung des zeitlichen Abstandes (Δt) ausgebildet ist, mit dem die Bilddaten und die Tondaten an der Aufnahmeeinrichtung (17, 19) eintreffen.

24. System nach Anspruch 22 oder 23,
**dadurch gekennzeichnet,**
**dass** mittels der Synchronisationseinrichtung (33) der Zeitpunkt (t3) des Eintreffens eines in den Tondaten enthaltenen, als Aufnahmeinformation (23) dienenden Tonsignals in Bezug auf den bekannten Zeitpunkt (t2) der Erzeugung des Tonsignals am Schauplatz (11) bestimmbar ist.

25. System nach einem der Ansprüche 17 bis 24,
**dadurch gekennzeichnet,**
**dass** die Aufnahmeeinrichtung (17, 19) eine Nachweiseinrichtung (35) umfasst, mittels welcher die Aufnahmeinformation (23) in den Tondaten nachweisbar und bei in den Tondaten vorhandener Aufnahmeinformation (23) ein Freigabesignal zur Bildung der Filmaufnahme bereitstellbar ist.

26. System nach einem der Ansprüche 17 bis 25,
**dadurch gekennzeichnet,**
**dass** es gemäß einem Verfahren nach einem der Ansprüche 1 bis 16 betreibbar ist.
